# EUROPEAN PATENT SPECIFICATION

(11) **EP 4 214 867 B1**
(45) Date of publication and mention of the grant of the patent: **18.09.2024**
(21) Application number: 20775853.3
(22) Date of filing: 21.09.2020
(51) Int. Cl.: H04L 67/51

(54) **INTRA-RAN SLICE-BASED UE CONTEXT MANAGEMENT OVER SERVICE BASED INTERFACE**
INTRA-RAN-SLICE-BASIERTE VERWALTUNG VON UE-KONTEXT ÜBER EINE DIENSTBASIERTE SCHNITTSTELLE
GESTION DE CONTEXTE D'ÉQUIPEMENT UTILISATEUR (UE) BASÉE SUR UNE TRANCHE INTRA-RAN SUR UNE INTERFACE BASÉE SUR UN SERVICE

(43) Date of publication of application: 26.07.2023
(73) Proprietor: Nokia Solutions and Networks Oy, 02610 Espoo (FI)
(72) Inventor: GODIN, Philippe, 78000 Versailles (FR); CHANDRASHEKAR, Subramanya, Bangalore 560079 (IN); BULAKCI, Ömer, 80997 Munich (DE)
(74) Representative: Script Intellectual Property LLP
(86) International application number: PCT/EP2020/076229
(87) International publication number: WO 2022/058027

(56) References cited:
- EP-A1- 3 742 799
- WO-A1-2019/184651
- DEUTSCHE TELEKOM: "NF Discovery Factors Conveyance", vol. CT WG3, no. Portoroz, Slovenia; 20191007 - 20191011, 30 September 2019 (2019-09-30), XP051788391, Retrieved from the Internet <URL:http://www.3gpp.org/ftp/tsg_ct/WG3_interworking_ex-CN3/TSGC3_106_Portoroz/Docs/C3-194239.zip> [retrieved on 20190930]
- NOKIA ET AL: "Evaluation of CP/UP separation", vol. RAN WG3, no. Qingdao, China; 20170627 - 20170629, 26 June 2017 (2017-06-26), XP051302254, Retrieved from the Internet <URL:http://www.3gpp.org/ftp/Meetings_3GPP_SYNC/RAN3/Docs/> [retrieved on 20170626]
- ERICSSON ET AL: "Resolution of E1 open issues - interface design", vol. RAN WG3, no. Berlin, Germany; 20170821 - 20170825, 22 August 2017 (2017-08-22), XP051330609, Retrieved from the Internet <URL:http://www.3gpp.org/ftp/tsg_ran/WG3_Iu/TSGR3_97/Docs/> [retrieved on 20170822]

## Description

### Field of the Invention

The present invention relates to an apparatus, a method and a computer program product for providing services such as UE context management of intra-RAN interfaces, e.g., F1 and E1, over the service-based interface architecture.

### Related background Art

The following meanings for the abbreviations used in this specification apply:
- 5MBS:: 5G Multicast Broadcast Service
- AN:: Access network
- AP:: Application protocol
- API:: Application programming interface
- CP:: Control plane
- CU:: Central unit
- DU:: Distributed unit
- E1AP:: E1 Application Protocol
- FLAP:: F1 Application Protocol
- gNB:: 5G base station
- HTTP:: Hyper text transfer protocol
- ID:: Identifier
- NF:: Network function
- NG:: Next generation
- NR:: New Radio
- NRF:: Network repository function
- OAM:: Operation and maintenance
- PDCP:: Packet Data Convergence Protocol
- RAN:: Radio access network
- RRM:: Radio Resource Management
- SBI:: Service based interface
- SCP:: Signaling connection proxy
- SDAP:: Service Data Adaptation Protocol
- TAI:: Tracking area identity
- UE: User equipment
- UP:: User plane
- URI:: Uniform resource identifier

Example embodiments, although not limited to this, relate to gNBs. In NR, a gNB may comprise a CU (gNB-CU) and set of DUs (gNB-DU). The CU is a logical node hosting RRC, SDAP and PDCP protocols of the gNB, and controls the operation of one or more DUs. The DU is a logical node hosting RLC, MAC and PHY layers of the gNB. One DU supports one or multiple cells. A CU and a DU are connected to each other through the F1 Interface and they communicate with F1AP procedures.

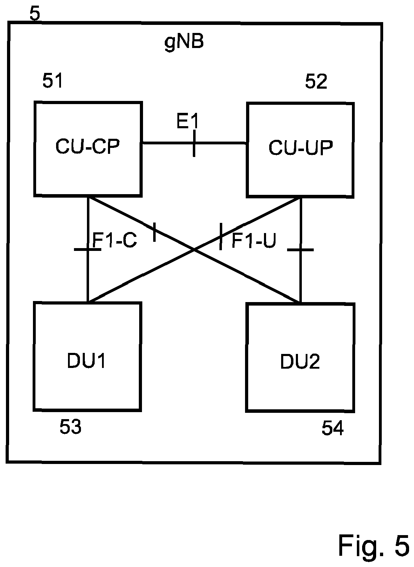

The CU can be separated into a CU-CP including the functions on the control plane (RRC and PDCP-C) and a CU-UP including the functions on the user plane (SDAP and PDCP-U). CU-CP and CU-UP are connected via the E1 interface. In this case, the CU-CP is connected with the DU via the F1-C interface, whereas the CU-UP is connected with the DU via the F1-U interface. An example is shown in Fig. 5, according to which a gNB 5 comprises a CU-CP 51 and a CU-UP 52 and two DUs, namely DU1 53 and DU2 54.

The general principles for the specification of the E1 interface are as follows: The E1 interface is open. The E1 interface supports the exchange of signalling information between its endpoints. From a logical standpoint, the E1 is a point-to-point interface between a CU-CP and a CU-UP. The E1 interface separates Radio Network Layer and Transport Network Layer. The E1 interface enables exchange of UE associated information and non-UE associated information.

The general principles for the specification of the F1 interface are as follows: The F1 interface is open. The F1 interface supports the exchange of signalling information between its endpoints, in addition the interface supports data transmission to the respective endpoints. From a logical standpoint, the F1 is a point-to-point interface between the endpoints. The F1 interface supports control plane and user plane separation. The F1 interface separates Radio Network Layer and Transport Network Layer. The F1 interface enables exchange of UE associated information and non-UE associated information.

Thus, the current 5G architecture has defined a gNB disaggregated architecture exhibiting three entities within the gNB (CU CP, CU UP and DU) and interfaces between them: F1 interface between CU CP and DU, E1 interface between CU CP and CU UP.

The F1 interface between the CU CP and DU is defined as a legacy point to point interface since 3GPP Release 15. F1AP is designed as a 3GPP F1-C Application Protocol over SCTP over F1.

The E1 interface between the CU CP and CU UP is defined as a legacy point to point interface since 3GPP Release 15. E1AP is designed as a 3GPP E1-C Application Protocol over SCTP over F1.

In this scenario, it would be advantageous when services etc. could be handled more flexibly among CU-CP, CU-UP and DU of a gNB.

WO2019184651A1 describes a communications method and apparatus according to which an appropriate central unit-user plane may be selected for a PDU session. The method comprises receiving, at a central unit-control plane, a message from a core network element, where the message carries assistance information, and the assistance information includes an identifier of a first data network corresponding to a protocol data unit session. The method also includes determining, by the central unit-control plane based on the assistance information, a first central unit-user plane corresponding to the protocol data unit session.

DEUTSCHE TELEKOM, "NF Discovery Factors Conveyance", vol. CT WG3, no. Portoroz, Slovenia; 20191007 - 20191011, (20190930), 3GPP DRAFT; C3-194239 DISCUSSION ON DELEGATED DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE describes NF discovery and NF service discovery enabled by Core Network entities (NFs or Service Communication Proxy (SCP)) such that they discover a set of NF instance(s) and NF service instance(s) for a specific NF service or an NF type. Methods described are such that a consumer adds necessary discovery and selection parameters required to find a suitable producer to a service request. The SCP uses the request address and the discovery and selection parameters in the request message to route the request to a suitable producer instance. The SCP can perform discovery with an NRF and obtain a discovery result.

### Summary of the Invention

The invention is defined by the independent claims. Dependent claims define preferred embodiments.

Examples aim to provide measures for flexibly managing services such as UE context management services intra-RAN, such as among CU-CP, CU-UP and DU of an access node such as a gNB.

According to a first aspect, an apparatus, in proxy element, is provided which comprises:
at least one processor and at least one memory including computer program code, the at least one memory and the computer program code configured to, with the at least one processor, cause the apparatus at least to perform:
receiving a request for providing at least one radio access service and/or slice and/or area from a control plane network control element of an access node,
sending a request for information concerning the at least one radio access service and/or slice and/or area to a network information storing element,
receiving information concerning at least one a user plane network control element or at least one network access element of the access node offering the at least one service and/or slice and/or matching the requested area from the network information storing element,
selecting a user plane network control element or a network access element based on the information for using the at least one radio access service and/or slice and/or area,
sending information on the requested radio access service and/or slice and/or area to the selected user plane network control element or network access element,
receiving the provided radio access service and/or slice and/or area from the selected user plane network control element or network access element, and
sending the provided radio access service and/or slice and/or area to the requesting control plane network control element.

According to a second aspect, a method, in proxy element, is provided which comprises:
receiving a request for providing at least one radio access service and/or slice and/or area from a control plane network control element of an access node,
sending a request for information concerning the at least one radio access service and/or slice and/or area to a network information storing element,
receiving information concerning at least one a user plane network control element or at least one network access element of the access node offering the at least one service and/or slice and/or matching the requested area from the network information storing element,
selecting a user plane network control element or a network access element based on the information for using the at least one radio access service and/or slice and/or area,
sending information on the requested radio access service and/or slice and/or area to the selected user plane network control element or network access element,
receiving the provided radio access service and/or slice and/or area from the selected user plane network control element or network access element, and
sending the provided radio access service and/or slice and/or area to the requesting control plane network control element.

The first and second aspects may be modified as follows:

The at least one radio access service and/or slice and/or area may comprise a user equipment context management service.

The proxy element may be a signalling proxy function, and/or the network information storing element may be a network repository function.

According to a third aspect of the present invention a computer program product is provided which comprises code means for performing a method according to the second, aspect and/or its modifications when run on a processing means or module. The computer program product may be embodied on a computer-readable medium, and/or the computer program product may be directly loadable into the internal memory of the computer and/or transmittable via a network by means of at least one of upload, download and push procedures.

### Brief Description of the Drawings

These and other objects, features, details and advantages will become more fully apparent from the following detailed description of arrangements. Arrangements not falling under the scope of the claims are to be considered examples suitable for understanding the invention. The description of arrangements is to be taken in conjunction with the appended drawings, in which:
Fig. 1A shows an NRF 1 according to an example arrangement,
Fig. 1B shows a DU/CU-UP 2 according to an example arrangement,
Fig. 1C shows a CU-CP 3 according to an example arrangement,
Fig. 1D shows an SCP 4 according to an example arrangement,
Fig. 2A shows a procedure carried out by the NRF 1 according to an example arrangement,
Fig. 2B shows a procedure carried out by the DU/CU-UP 2 according to an example arrangement,
Fig. 2C shows a procedure carried out by the CU-CP 3 according to an example arrangement,
Fig. 2D shows a procedure carried out by the SCP 4 according to an example embodiment,
Fig. 3 shows a call flow according to a first arrangement,
Fig. 4 shows a call flow according to a second arrangement, and
Fig. 5 shows a gNB comprising a central unit (CU) and distributed units (DUs).

### Detailed Description of example arrangements

In the following, description will be made to example arrangements. It is to be understood, however, that the description is given by way of example only, and that the described example arrangements are by no means to be understood as limiting the present invention thereto.

As mentioned above, it would be advantageous when services etc. could be handled more flexibly among RAN elements and/or functions, e.g., CU-CP, CU-UP and DU of an access node such as a gNB. Thus, according to some arrangements, the functions of E1 and F1 interfaces, example UE context management, are re-designed to be performed using service based interfaces. For example, it might be beneficial to re-design the functions of F1 interface and the E1 interface as a service-based interface, based on the principles of service-based architecture.

However, when re-designing the F1 and E1 interfaces in this way, the following issues can be associated with the current design of F1 and E1 interfaces for many functions including the UE context management functions:

### Issue 1: Scalability of DU and CU-UP

Context management between CU-CP and DU is done over a point-to-point interface, i.e., F1, which is not easily scalable, especially when there is more traffic in hotspots. Likewise, context management between CU-CP and CU-UP is done over a point-to-point interface, i.e., E1, which is not easily scalable.

Issue 2: On-demand/Dynamic activation/deactivation of a given slice or service in a gNB.

This implies that a slice/service specific CU-UP and/or gNB-DU needs to be instantiated only when there are UEs requesting/accessing such a service/slice. A static resource allocation (physical, hardware, RRM etc.) can cause a lot of resource wastage. The same principle would have to be used when an entirely new service/slice is requested by a UE. If the operator has provisioned a specific node for such service/slice, it could be activated.

It is noted that issue 2 can be particularly complex in a multi-vendor deployment because there could be OAM specific to CU-CP, CU-UP and DU. Co-ordination between them is complex and hence scalability is extremely complex.

Thus, example embodiments aim to enable flexible service management, e.g., UE context management between CU-CP and DU using a service based interface and UE context management between CU-CP and CU-UP using a service based interface.

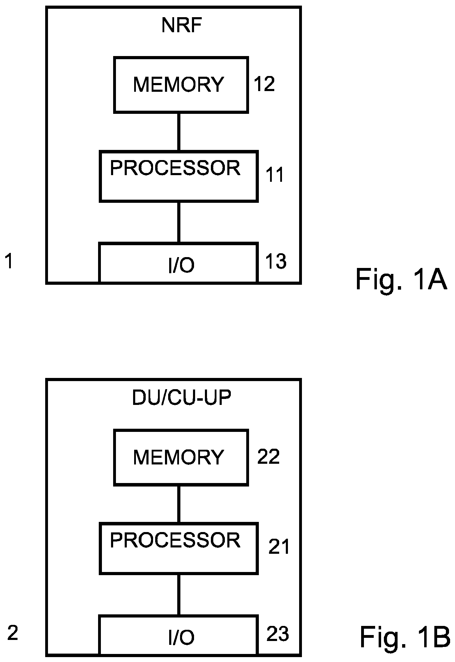

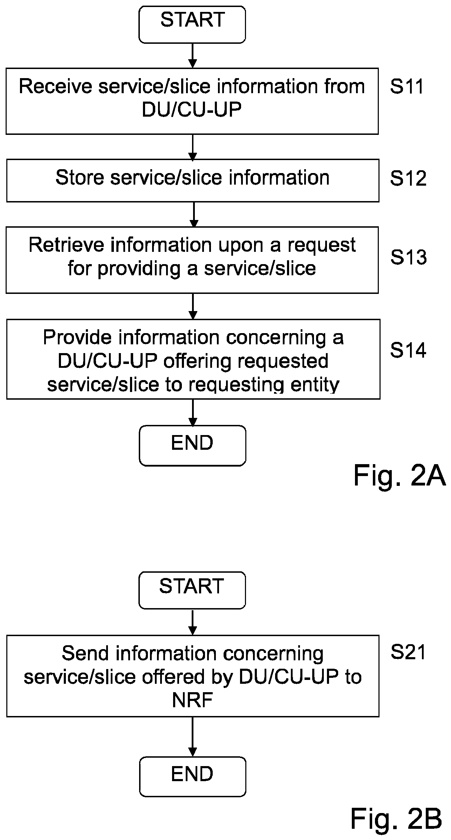

In the following, a general overview of some example embodiments is described by referring to Figs. 1A to 1D and Figs. 2A to 2B.

As mentioned above, example arrangements aim to provide measures for flexibly managing services such as UE context management services intra-

RAN, such as among CU-CP, CU-UP and DU of a gNB. The gNB is used to refer to an access node or base station, which is not limited to the 5G system. The elements of a gNB, e.g., CU-CP, CU-UP and DU are exemplarily used herein to illustrate the invention; it can be expected that beyond 5G networks, e.g., 6G, may define or implement new or other network elements and interfaces, where the various embodiments of the invention can be applied. In the following, radio access network (RAN) and access network (AN) are equivalent.

Fig. 1A shows a NRF 1 as an example for a network information storing element according toone arrangement. A procedure carried out by the NRF 1 is illustrated in Fig. 2A.

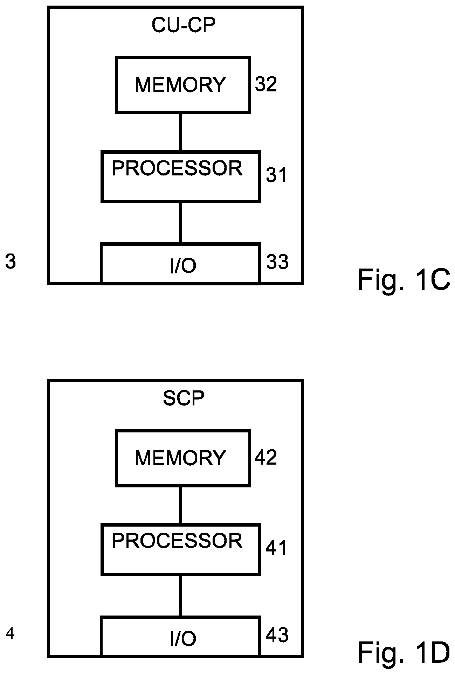

The NRF 1 comprises at least one processor 11 and at least one memory 12 including computer program code. The at least one processor 11, with the at least one memory 12 and the computer program code, is configured to cause the apparatus to perform: receiving information concerning at least one radio access service and/or slice offered by at least one user plane network control element or network access element (e.g., DU/CU-UP 2 shown in Fig. 1B) of an access node (such as a gNB) from the at least one user plane network control element or network access element, as shown in S11 of Fig. 2A, storing the information as shown in S12 of Fig. 2A, and, upon receiving a request for providing at least one service and/or slice and/or area in the access node from a requesting entity (e.g., CU-CP 3 shown in Fig. 1C), retrieving information concerning at least one user plane network control element or network access element offering the requested radio access service and/or slice and/or matching the requested area based on the received request from the stored information, as shown in S13 of Fig. 2A, and sending information concerning the at least one user plane network control element or network access element offering the requested radio access service and/or slice and/or matching the requested area to the requesting entity, as shown in S14 of Fig. 2A.

Fig. 1B shows a DU/CU-UP 2 as an example for a network access element (such as a distributed unit in an access node such as a gNB) or a user plane network control element (such as a central unit (CU) handling user plane (UP) in the gNB-CU) according to an arrangement. A procedure carried out by the DU/CU-UP 2 is illustrated in Fig. 2B.

The DU/CU-UP 2 comprises at least one processor 21 and at least one memory 22 including computer program code. The at least one processor 21, with the at least one memory 22 and the computer program code, is configured to cause the apparatus to perform: sending information concerning at least one radio access service and/or slice offered by the user plane network control element or the network access element to a network information storing element.

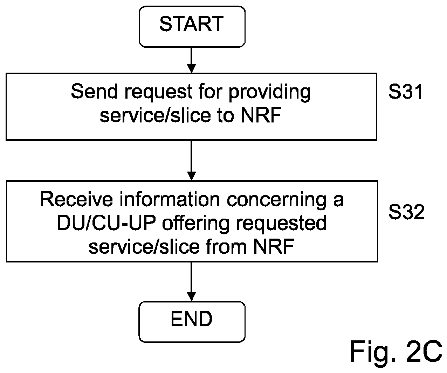

Fig. 1C shows a CU-CP 3 as an example for a control plane network control element according to an arrangement. A procedure carried out by the CU-CP 3 is illustrated in Fig. 2C.

The CU-CP 3 comprises at least one processor 31 and at least one memory 32 including computer program code. The at least one processor 31, with the at least one memory 32 and the computer program code, is configured to cause the apparatus to perform: sending a request for providing at least one radio access service and/or slice and/or area in the access node to a network information storing element (e.g., NRF 1 shown in Fig. 1A), as shown in S31 of Fig. 2C, and receiving information concerning at least one user plane network control element or network access element (e.g., DU/CP-UP 2 shown in Fig. 1B) offering the requested radio access service and/or slice and/or matching the requested area from the network information storing element, as shown in S32 of Fig. 2C.

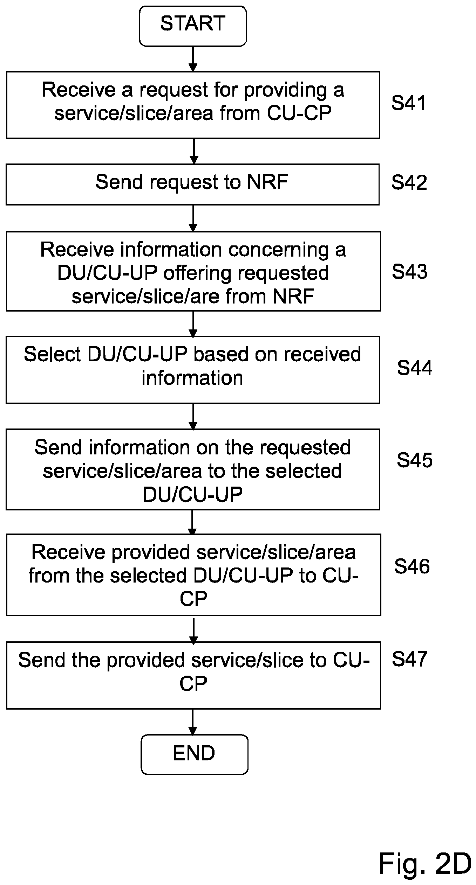

Fig. 1D shows a SCP 4 as an example for a proxy element according to an embodiment of the invention. A procedure carried out by
the SCP 4 is illustrated in Fig. 2D.

The SCP 4 comprises at least one processor 41 and at least one memory 42 including computer program code. The at least one processor 41, with the at least one memory 42 and the computer program code, is configured to cause the apparatus to perform: receiving a request for providing at least one radio access service and/or slice and/or area from a control plane network control element (e.g., CU-CP 2 shown in Fig. 1B) of an access node such as a gNB, as shown in S41 of Fig. 2D, sending a request for information concerning the at least one radio access service and/or slice and/or area to a network information storing element (e.g., NRF 1 shown in Fig. 1A), as shown in S42 of Fig. 2D, receiving information concerning at least one a user plane network control element or at least one network access element of the access node offering the radio access service and/or or slice and/or matching the requested area from the network information storing element, as shown in S43 of Fig. 2D, selecting a user plane network control element or a network access element based on the information for using the at least one radio access service and/or slice and/or area, as shown in S44 of Fig. 2D, sending information on the requested radio access service and/or slice and/or area to the selected user plane network control element or network access element, as shown in S45 of Fig. 2D, receiving the provided radio access service from the selected user plane network control element or network access element (e.g. a context ID if the radio access service is UE context management service), as shown in S46 of Fig. 2D and sending the provided radio access service to the requesting control plane network control element, as shown in S47 of Fig. 2D.

The elements 1 to 4 described above may further comprise I/O unit 13, 23, 33, 43, which are capable of transmitting to and receiving from other network elements or functions, such as virtual network functions (VNFs).

Thus, according to some example arrangements as described above, user plane network control elements (e.g., CU-UP) and/or network access elements (e.g., DUs) may register radio access services and/or slices and/or areas which they can offer with a network information element (e.g., NRF). A network element (e.g., CU-CP) requesting such a radio access service/slice may request the NRF to provide it with information concerning the services offered by the user plane network control elements and/or network access elements, so that the requesting network element can easily use the service.

According to example embodiments of the invention, the requesting network element (e.g., CU-CP) may request for information concerning offered radio access services and/or slices or areas via a proxy element (e.g., a SCP).

Thus, it can be possible to provide measures for managing services such as UE context management services without pre-established F1 and/or E1 interfaces.

In the following, this is further described by referring to some further detailed embodiments.

According to some arrangements, the service-based interface (SBI) architecture is leveraged to enable a CU-CP to discover the UE context management service associated with a DU/Cell NF and to enable the discovery of an appropriate CU-UP NF suitable for the involved UE context management service and/or slice and/or to enable the discovery of the UE context management service associated with the CU UP.

According to example arrangements, the following is used:
A RAN-NRF (or NG-RAN node-NRF) is used for discovery of a target entity (CU UP and/or DU) for a target service, and according to example embodiments of the invention, an SCP is used as proxy routing.

A DU/Cell registers to the NRF, with NF=DU/Cell ID (function). A CU-UP also registers to the NRF, with NF=CU UP ID (function). For example, an NF profile (e.g., area equals list of TAIs/cells, list of slices, list of services) may be supplied form the DU/Cell and/or the CU-UP to the NRF, e.g., based on provisioning from the OAM.

A list of services of the SBI API may be provided by the NRF, e.g. as follows:
- SBI Service 1: UE Context management
- Access: IP@ address to access the "UE context management" service
   - Attributes: requested Slices / radio access services
   - Service delivered: CU-UP ID, CU UP Context ID or DU ID, DU Context ID.
   - Alternative services delivered:
      list of CU UPs satisfying requested criteria,
      CU UP IP address(es), DU IP address(es), in case of dynamic activation and
      reuse of legacy F1, E1 with the CU-UP or DU after the discovery of the service.

Two modes of operation may be applied in this way:
Mode 1: the service consumer (e.g., a CU-CP) asks the NRF for discovery and the consumer selects the service provider (e.g., the CU-UP or DU, which provides the requested service).
Mode 2: According to example embodiments of the invention the service consumer asks a SCP to do the discovery with the NRF and then to select the service provider.

Arrangements also offer the following other key characteristics:
- The NRF can be internal to RAN or edge cloud or central cloud, i.e., RAN-NRF.
- The RAN-NRF may be implemented together with other NRF functionalities in the network, e.g., core network (CN) NRF
- The RAN-NRF can be centralized or distributed, e.g., RAN-NRF per gNB or group of gNBs.
- In case of more granular gNBs also referred to as service-based gNBs (SB-gNBs) where the gNB may comprise one or more virtual and/or physical network functions or elements, e.g., having more granularity than CU-CP, CU-UP, and DU, the NFs in a gNB may also register/discover services at RAN-NRF(s).
- According to example embodiments of the invention, the SCP may be used as a proxy for inter-AN communication. This can apply to the case of distributed RAN-NRFs
- When a centralized RAN-NRF is utilized, the RAN-NRF can be used for inter-AN communication. In such arrangements, SCP may or may not be used as a proxy.

The services subscribed could include discovery and/or dynamic activation/deactivation of a given service/slice from a CU-UP and/or gNB-DU.

The trigger for activation could be a service request from a UE and the trigger for deactivation could be that the service is not being accessed by any UE in the gNB.

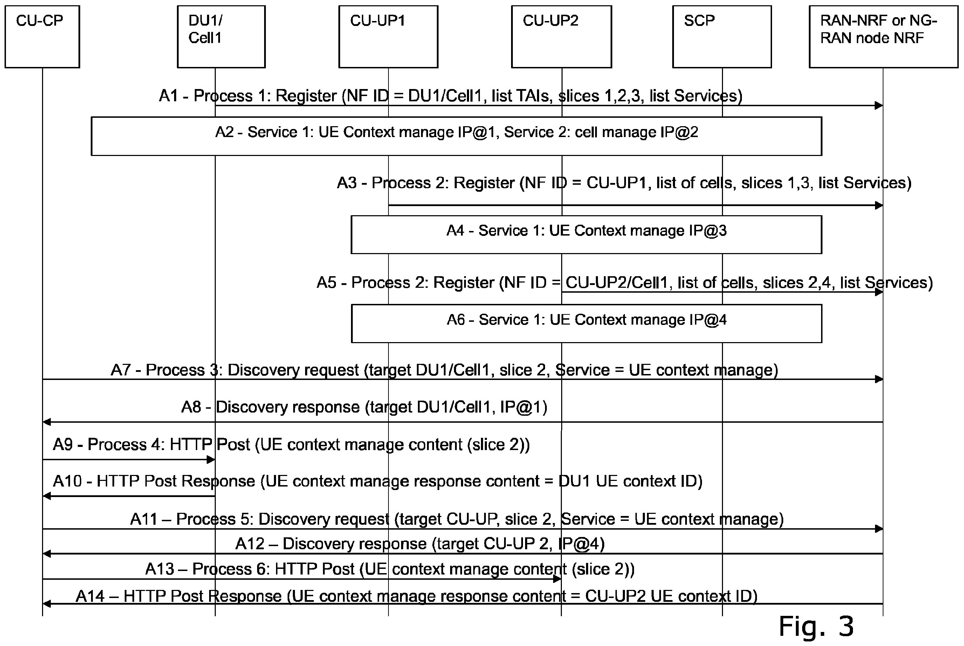

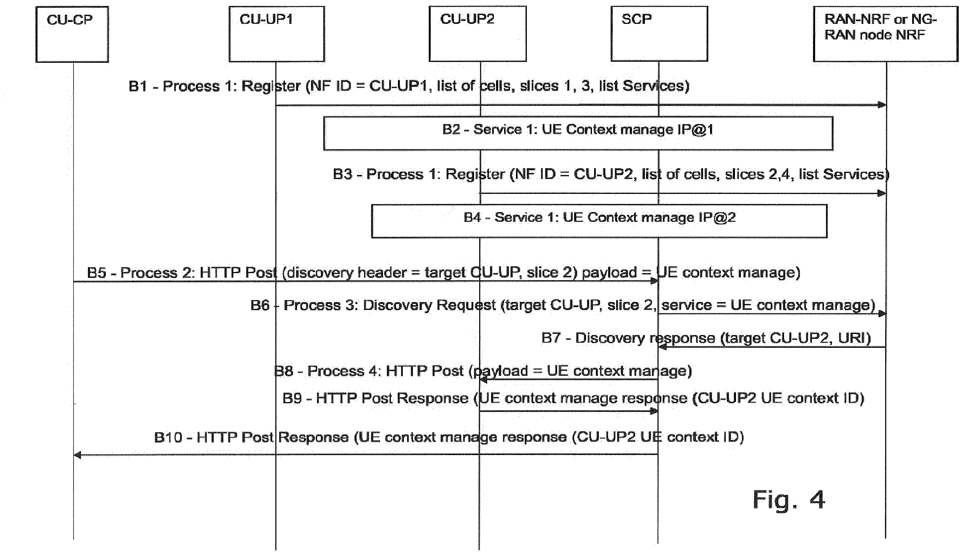

In the following, a first arrangement and a second arrangement are described by referring to Figs. 3 and 4.

In the first arrangement, the discovery is done by CU-CP directly to the RAN NRF and the SCP is not used.

In the second arrangement, in accordance with an example embodiment of the invention, the CU-CP uses the SCP for the discovery and the routing of the HTTP request.

In the following, the first arrangement is described in more detail by referring to the call flow shown in Fig. 3. As mentioned above, according to the first embodiment, the discovery is done by CU-CP directly with the RAN NRF, and the SCP is not used.

This is illustrated in the call flow shown in Fig. 3, in which the main processes in this connection are shown.

Process 1: all DU/Cells register their services offered to the RAN NRF including the radio access service called UE Context Management and the associated attributes such as the supported slices and/or the associated area (e.g. list of TAIs).

In Fig. 3, this is shown in A1: The DU/Cell 1 registers its radio access services with the NRF (which may be a RAN-NRF of a NG-RAN node NRF, as mentioned above) by sending a message "Register (NF ID = DU1/Cell1, list TAIs, slices 1,2,3, list Services) to the NRF. As indicated in A2, two services are exemplarily registered, namely Service 1: UE context manage, which is identified by IP@1, and Service 2: cell manage, which is identified by IP@2.

Process 2: all CU UPs register their radio access services offered to the RAN NRF including the service called UE Context Management and the associated attributes such as the supported slices and/or associated areas (e.g. list of TAIs).

In Fig. 3, this is shown in A3, in which CU-UP1 registers its radio access services with the NRF by sending a message "Register (NF ID = CU-UP1, list of cells, slices 1,3, list Services)" to the NRF. As indicated in A2, the registered service is Service 1: UE context manage, which is identified by IP@2. In A5, CU-UP2 registers its services with the NRF by sending a message "Register (NF ID = CU-UP2/Cell1, list of cells, slices 2,4, list Services)" to the NRF. As indicated in A6, the registered service is Service 1: UE context manage, which is identified by IP@4.

Process 3: CU-CP receives a connection request for a UE for a given DU/Cell 1 and triggers the Discovery Request to RAN NRF with associated slice 2 (or list of slices) to learn the URI (IP address) at which it could reach the UE context management service of DU/Cell1 for the indicated radio access service or slice(s).

In detail, in A7 the CU-CP sends a message "Discovery request (target DU1/Cell1, slice 2, Service = UE context manage)" to the NRF. The NRF responds with a message "Discovery response (target DU1/Cell1, IP@1)". Thus, the CU-CP now knows that the requested service is offered by DU1/Cell1, and has the necessary IP address information.

Process 4: Upon receiving the response from RAN NRF, the CU-CP uses the received URI to request the service of UE context management from DU1/Cell 1 for the indicated slice(s) and receives from DU/Cell 1 a DU UE Context ID.

In detail, in A9, the CU-CP sends a message "HTTP Post (UE context manage content (slice 2))" to the DU1/Cell1, and in A10, the DU1/Cell1 responds with "HTTP Post Response (UE context manage response content = DU1 UE context ID)"

Process 5: In parallel, the CU-CP triggers the Discovery Request to RAN NRF with associated slice 2 (or list of slices) to learn the URI (IP address) at which it could reach the UE context management service of an appropriate CU-UP for the indicates slice(s).

In detail, in A11, the CU-CP sends a message "Discovery request (target CU-UP, slice 2, Service = UE context manage)" to the RAN NRF, which responds with "Discovery response (target CU-UP2, IP@4)" in A12. Hence, the CU-CP knows that CU-UP2 offers the requested service, and the IP address for the service is IP@4.

Process 6: Upon receiving the response from RAN NRF, CU-CP uses the received CU-UP 2 and associated URI to request the service of UE context management from CU-UP 2 for the indicated slice(s) and receives from CU UP 2 a CU-UP 2 UE Context ID.

In detail, in A13, the CU-CP sends a message "HTTP Post (UE context manage content (slice 2))" to the CU-UP2, which responds with a "HTTP Post Response (UE context manage response content = CU-UP2 UE context ID)" in A14.

It is noted that the order of the flows can be different, e.g., the interaction between the CU-CP and the CU-UP (process 6) may be carried out first, and then the interaction between the CU-CP and DU/Cell (process 4) may be carried out.

According to the first arrangement, the Discovery Request message is an example for the message sent in S13 shown in Fig. 2A or S31 shown in Fig. 2C, and the Discovery Response message is an example for the message sent in S14 shown in Fig. 2A or S32 shown in Fig. 2C.

It is also noted that the association between the discovered CU-UP and DU for the UE's radio access service or slice is established by the CU-CP. This implies that the further communication in the context of the said UE can occur directly between CU-CP, CU-UP and the DU respectively. That is, the CU-CP may maintain the association between the CU-CP and the CU-UP and/or UE for further transmissions, or the CU-CP may use the association with the CU-UP or the DU to directly request the service. In the latter case, the NRF is only used for getting the right CU UP/DU then the CU CP asks directly the service to CU UP/DU over the legacy interface.

Moreover, in all the above, RAN NRF can be substituted to NG-RAN node-NRF whenever an NRF at one NG-RAN node level would be used.

In the following, the second arrangement, in accordance with an example embodiment of the invention is described by referring to Fig. 4. As mentioned above, according to the second arrangement, the CU-CP uses (interacts with) the SCP for the discovery and the routing of the HTTP request.

This is illustrated in the call flow shown in Fig. 4. In this call flow only the interactions between CU CP and CU UP are shown, but this is also applicable to the interactions between CU CP and DU (and/or DU/Cell) which can be easily deduced.

Process 1: all CU UPs register their radio access services offered to the RAN NRF including the service called UE Context Management and the associated attributes such as the supported slices and/or area (e.g. list of TAIs).

In detail, in B1, CU-UP1 sends a message "Register (NF ID = CU-UP1, list of cells, slices 1, 3, list Services)" to the NRF. As indicated in B2, the registered service is Service 1: UE context manage, which is identified by IP@1. In B3, CU-UP2 sends a message "Register (NF ID = CU-UP2, list of cells, slices 2,4, list Services)" to the NRF. As indicated in B4, the registered service is Service 1: UE context manage, which is identified by IP@2.

Process 2: The CU-CP receives a connection request for a UE for a given DU/Cell 1 and sends an HTTP Post request to the SCP including the targeted slice(s) and node type (CU UP) in the Discovery header and the requested service (UE context manage) in the Discovery payload.

In detail, in B5, the CU-CP sends a message "HTTP Post (discovery header = target CU-UP, slice 2) payload = UE context manage)" to the SCP.

Process 3: The SCP triggers the Discovery Request to RAN NRF to learn the URI (IP address) at which it could reach the UE context management service of a CU UP suitable for the indicated slice(s).

In detail, in B6, the SCP sends a message "Discovery Request (target CU-UP, slice 2, service = UE context manage)" to the RAN NRF, which responds with "Discovery response (target CU-UP2, URI)" in B7.

Process 4: Upon receiving the response from the RAN NRF, the SCP uses the received CU-UP2 and associated URI to request the service of UE context management from CU-UP2 for the indicated slice(s) and receives from CU-UP2 a CU-UP2 UE Context ID.

In detail, in B8, the SCP sends a message "HTTP Post (payload = UE context manage)" to the CU-UP2. The CU-UP2 responds with "HTTP Post Response (UE context manage response (CU-UP 2 UE context ID)" in B9 to the SCP.

Process 5: the SCP provides the received CU-UP 2, CU-UP 2 UE Context ID to the source CU-CP in HTTP Post Response message.

In detail, the SCP forwards a message "HTTP Post Response (UE context manage response (CU-UP2 UE context ID)" to the CU-CP in B10.

Thus, in contrast to the first arrangement, according to the second arrangement, the CU-CP sends the service request to SCP and the next message it receives is directly the provided service.

According to the second arrangement, the HTTP Post message is an example for the message sent in S41 shown in Fig. 2D, the HTTP Post response message is an example for the message sent in S47, the Discovery Request message is an example for the message sent in S42 shown in Fig. 2D, and the Discovery Response message is an example for the message sent in S43 shown in Fig. 2D.

It is noted that, similar as according to the first arrangement, in all the above, RAN NRF can be substituted to NG-RAN node-NRF whenever an NRF at one NG-RAN node level would be used.

The above-described example arrangements are only examples and may be modified, e.g., the message content can be modified.

Names of network elements, protocols, and methods are based on current standards. In other versions or other technologies, the names of these network elements and/or protocols and/or methods may be different, as long as they provide a corresponding functionality.

In general, the example arrangements may be implemented by computer software stored in the memory (memory resources, memory circuitry) 12, 22, 32, 42 and executable by the processor (processing resources, processing circuitry) 11, 21, 31, 41 or by hardware, or by a combination of software and/or firmware and hardware.

As used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

The memory (memory resources, memory circuitry) 12, 22, 32, 42 may be of any type suitable to the local technical environment and may be implemented using any suitable data storage technology, such as semiconductor based memory devices, magnetic memory devices and systems, optical memory devices and systems, fixed memory and removable memory, and non-transitory computer-readable media. The processor (processing resources, processing circuitry) 11, 21, 31, 41 may be of any type suitable to the local technical environment, and may include one or more of general purpose computers, special purpose computers, microprocessors, digital signal processors (DSPs) and processors based on a multi core processor architecture, as non-limiting examples.

It is to be understood that the above description is illustrative of the invention and is not to be construed as limiting the invention. Various modifications and applications may occur to those skilled in the art without departing from the invention which is defined by the appended claims.

## Claims

1. An apparatus, in proxy element, comprising:
at least one processor and at least one memory including computer program code,
the at least one memory and the computer program code configured to, with the at least one processor, cause the apparatus at least to perform:
receiving, from a control plane network control element of an access node, a request (B5) for providing at least one radio access service 30 and/or slice and/or area;
sending, to a network information storing element, a request (B6) for information concerning the at least one radio access service and/or slice and/or area;
receiving, from the network information storing element, information (B7) concerning a user plane network control element or at least one network access element, the user plane network control element or the at least one network access element belonging to an access node offering the at least one radio access service and/or slice and/or matching the requested area,
selecting, based on the information, a user plane network control element or a network access element for using the at least one radio access service and/or slice and/or area,
sending, to the selected user plane network control element or network access element, information (B8) on the requested radio access service and/or slice and/or area;
receiving (B9), from the selected user plane network control element or network access element, the provided radio access service and/or slice and/or area; and
sending (B10) the provided radio access service and/or slice and/or area to the requesting control plane network control element;
wherein the at least one radio access service and/or slice and/or area comprises a user equipment context management service.

2. The apparatus according to claim 1, wherein the proxy element is a signalling proxy function, and/or the network information storing element is a network repository function.

3. A method, in proxy element, comprising:
receiving, from a control plane network control element of an access node, a request (B5) for providing at least one radio access service and/or slice and/or area;
sending, to a network information storing element, a request (B6) for information concerning the at least one radio access service and/or slice and/or area;
receiving, from the network information storing element, information (B7) concerning a user plane network control element or at least one network access element, the user plane network control element or the at least one network access element belonging to an access node offering the at least one radio access service and/or slice and/or matching the requested area;
selecting, based on the information, a user plane network control element or a network access element for using the at least one radio access service and/or slice and/or area,
sending, to the selected user plane network control element or
network access element, information (B8) on the requested radio access service and/or slice and/or area;
receiving (B9), from the selected user plane network control element or network access element, the provided radio access service and/or slice and/or area; and
sending (B10) the provided radio access service and/or slice and/or area to the requesting control plane network control element;
wherein the at least one radio access service and/or slice and/or area comprises a user equipment context management service.

4. The method according to claim 3, wherein the proxy element is a signalling proxy function, and/or the network information storing element is a network repository function.

5. A computer program product comprising code means for performing a method according to any one of the claims 3 to4 when run on a processing means or module.

6. The computer program product according to claim 5, wherein the computer program product is embodied on a computer-readable medium, and/or the computer program product is directly loadable into the internal memory of the computer and/or transmittable via a network by means of at least one of upload, download and push procedures.

## Patentansprüche

1. Vorrichtung in einem Proxyelement, die Folgendes umfasst:
mindestens einen Prozessor und mindestens einen Speicher, der Computerprogrammcode beinhaltet, wobei der mindestens eine Speicher und der Computerprogrammcode dazu ausgelegt sind, die Vorrichtung mit dem mindestens einen Prozessor zu veranlassen, mindestens Folgendes durchzuführen:
Empfangen einer Anforderung (B5) zum Bereitstellen von mindestens einem Funkzugangsdienst und/oder mindestens einer Slice und/oder mindestens eines Bereichs von einem Netzwerksteuerelement auf Steuerebene eines Zugangsknotens;
Senden einer Anforderung (B6) von Informationen, die den mindestens einen Funkzugangsdienst und/oder mindestens die eine Slice und/oder mindestens den einen Bereich betreffen, an ein Netzwerkinformationsspeicherelement;
Empfangen von Informationen (B7), die ein Netzwerksteuerelement auf Benutzerebene oder mindestens ein Netzwerkzugangselement betreffen, vom Netzwerkinformationsspeicherelement, wobei das Netzwerksteuerelement der Benutzerebene oder das mindestens eine Netzwerkzugangselement zu einem Zugangsknoten gehört, das den mindestens einen Funkzugangsdienst und/oder die mindestens eine Slice und/oder das Angleichen des angeforderten Bereichs anbietet,
Auswählen eines Netzwerksteuerelements auf Benutzerebene oder eines Netzwerkzugangselements auf Basis der Informationen zum Verwenden des mindestens einen Funkzugangsdienstes und/oder der mindestens einen Slice und/oder des mindestens einen Bereichs,
Senden von Informationen (B8) über den angeforderten Funkzugangsdienst und/oder die angeforderte Slice und/oder den angeforderten Bereich, an das Netzwerksteuerelement auf Benutzerebene oder das Netzwerkzugangselement;
Empfangen (B9) des bereitgestellten Funkzugangsdienstes und/oder der bereitgestellten Slice und/oder des bereitgestellten Bereichs vom ausgewählten Netzwerksteuerelement auf Benutzerebene oder vom Netzwerkzugangselement und
Senden (B10) des bereitgestellten Funkzugangsdienstes und/oder der bereitgestellten Slice und/oder des bereitgestellten Bereichs an das anfordernde Netzwerksteuerelement auf Steuerebene;
wobei der mindestens eine Funkzugangsdienst und/oder die mindestens eine Slice und/oder der mindestens eine Bereich einen Kontextverwaltungsdienst für eine Teilnehmereinrichtung umfasst.

2. Vorrichtung nach Anspruch 1, wobei das Proxyelement eine signalisierende Proxyfunktion ist und/oder das Netzwerkinformationsspeicherelement eine Netzwerkrepositoriumsfunktion ist.

3. Verfahren in einem Proxyelement, das Folgendes umfasst:
Empfangen einer Anforderung (B5) zum Bereitstellen von mindestens einem Funkzugangsdienst und/oder mindestens einer Slice und/oder mindestens eines Bereichs von einem Netzwerksteuerelement auf Steuerebene eines Zugangsknotens;
Senden einer Anforderung (B6) von Informationen, die den mindestens einen Funkzugangsdienst und/oder mindestens die eine Slice und/oder mindestens den einen Bereich betreffen, an ein Netzwerkinformationsspeicherelement;
Empfangen von Informationen (B7), die ein Netzwerksteuerelement auf Benutzerebene oder mindestens ein Netzwerkzugangselement betreffen, vom Netzwerkinformationsspeicherelement, wobei das Netzwerksteuerelement der Benutzerebene oder das mindestens eine Netzwerkzugangselement zu einem Zugangsknoten gehört, das den mindestens einen Funkzugangsdienst und/oder die mindestens eine Slice und/oder das Angleichen des angeforderten Bereichs anbietet;
Auswählen eines Netzwerksteuerelements auf Benutzerebene oder eines Netzwerkzugangselements auf Basis der Informationen zum Verwenden des mindestens einen Funkzugangsdienstes und/oder der mindestens einen Slice und/oder des mindestens einen Bereichs,
Senden von Informationen (B8) über den angeforderten Funkzugangsdienst und/oder die angeforderte Slice und/oder den angeforderten Bereich, an das Netzwerksteuerelement auf Benutzerebene oder das Netzwerkzugangselement;
Empfangen (B9) des bereitgestellten Funkzugangsdienstes und/oder der bereitgestellten Slice und/oder des bereitgestellten Bereichs vom ausgewählten Netzwerksteuerelement auf Benutzerebene oder vom Netzwerkzugangselement und
Senden (B10) des bereitgestellten Funkzugangsdienstes und/oder der bereitgestellten Slice und/oder des bereitgestellten Bereichs an das anfordernde Netzwerksteuerelement auf Steuerebene;
wobei der mindestens eine Funkzugangsdienst und/oder die mindestens eine Slice und/oder der mindestens eine Bereich einen Kontextverwaltungsdienst für eine Teilnehmereinrichtung umfasst.

4. Verfahren nach Anspruch 3, wobei das Proxyelement eine signalisierende Proxyfunktion ist und/oder das Netzwerkinformationsspeicherelement eine Netzwerkrepositoriumsfunktion ist.

5. Computerprogrammprodukt, das Codemittel zum Durchführen eines Verfahrens nach einem der Ansprüche 3 bis 4, wenn es auf einem Verarbeitungsmittel oder -modul ausgeführt wird, umfasst.

6. Computerprogrammprodukt nach Anspruch 5, wobei das Computerprogrammprodukt auf einem computerlesbaren Medium verkörpert und/oder das Computerprogrammprodukt direkt in den internen Speicher des Computers ladbar und/oder via ein Netzwerk über mindestens eines von Upload-, Download- und Pushprozeduren übertragbar ist.

## Revendications

1. Appareil dans un élément mandataire comprenant :
au moins un processeur et au moins une mémoire comportant un code de programme informatique,
l'au moins une mémoire et le code de programme informatique étant configurés pour, avec l'au moins un processeur, amener l'appareil à effectuer au moins ce qui suit :
recevoir, d'un élément de contrôle de réseau de plan de contrôle d'un noeud d'accès, une demande (B5) de fournir au moins un service d'accès radio et/ou une tranche et/ou une zone ;
envoyer à un élément de stockage d'informations de réseau une demande (B6) d'informations concernant l'au moins un service d'accès radio et/ou une tranche et/ou une zone ;
recevoir de l'élément de stockage d'informations de réseau des informations (B7) concernant un élément de contrôle de réseau de plan utilisateur ou au moins un élément d'accès au réseau, l'élément de contrôle de réseau de plan utilisateur ou l'au moins un élément d'accès au réseau appartenant à un noeud d'accès offrant l'au moins un service d'accès radio et/ou une tranche et/ou correspondant à la zone demandée,
sur la base des informations, sélectionner un élément de contrôle de réseau de plan utilisateur ou un élément d'accès au réseau pour utiliser l'au moins un service d'accès radio et/ou une tranche et/ou une zone,
envoyer à l'élément de contrôle de réseau de plan utilisateur ou à l'élément d'accès au réseau sélectionné des informations (B8) sur le service d'accès radio et/ou la tranche et/ou la zone demandé(e) ;
recevoir (B9), de l'élément de contrôle de réseau de plan utilisateur ou de l'élément d'accès au réseau sélectionné, le service d'accès radio et/ou la tranche et/ou la zone fourni(e) ; et
envoyer (B10) le service d'accès radio et/ou la tranche et/ou la zone fourni (e) à l'élément de contrôle de réseau de plan de contrôle demandeur ;
dans lequel l'au moins un service d'accès radio et/ou une tranche et/ou une zone comprend un service de gestion de contexte d'équipement utilisateur.

2. Appareil selon la revendication 1, dans lequel l'élément mandataire est une fonction mandataire de signalisation, et/ou l'élément de stockage d'informations de réseau est une fonction de référentiel réseau.

3. Procédé dans un élément mandataire, comprenant les étapes suivantes :
recevoir, d'un élément de contrôle de réseau de plan de contrôle d'un noeud d'accès, une demande (B5) de fournir au moins un service d'accès radio et/ou une tranche et/ou une zone ;
envoyer à un élément de stockage d'informations de réseau une demande (B6) d'informations concernant l'au moins un service d'accès radio et/ou une tranche et/ou une zone ;
recevoir de l'élément de stockage d'informations de réseau des informations (B7) concernant un élément de contrôle de réseau de plan utilisateur ou au moins un élément d'accès au réseau, l'élément de contrôle de réseau de plan utilisateur ou l'au moins un élément d'accès au réseau appartenant à un noeud d'accès offrant l'au moins un service d'accès radio et/ou une tranche et/ou correspondant à la zone demandée ;
sur la base des informations, sélectionner un élément de contrôle de réseau de plan utilisateur ou un élément d'accès au réseau pour utiliser l'au moins un service d'accès radio et/ou une tranche et/ou une zone,
envoyer à l'élément de contrôle de réseau de plan utilisateur ou à l'élément d'accès au réseau sélectionné des informations (B8) sur le service d'accès radio et/ou la tranche et/ou la zone demandé(e) ;
recevoir (B9), de l'élément de contrôle de réseau de plan utilisateur ou de l'élément d'accès au réseau sélectionné, le service d'accès radio et/ou la tranche et/ou la zone fourni(e) ; et
envoyer (B10) le service d'accès radio et/ou la tranche et/ou la zone fourni (e) à l'élément de contrôle de réseau de plan de contrôle demandeur ;
dans lequel l'au moins un service d'accès radio et/ou une tranche et/ou une zone comprend un service de gestion de contexte d'équipement utilisateur.

4. Procédé selon la revendication 3, dans lequel l'élément mandataire est une fonction mandataire de signalisation, et/ou l'élément de stockage d'informations de réseau est une fonction de référentiel réseau.

5. Produit de programme informatique comprenant des moyens de code pour réaliser un procédé selon l'une des revendications 3 et 4 lorsqu'il est exécuté sur un moyen ou un module de traitement.

6. Produit de programme informatique selon la revendication 5, dans lequel le produit de programme informatique est incorporé sur un support lisible par ordinateur, et/ou le produit de programme informatique est directement chargeable dans la mémoire interne de l'ordinateur et/ou transmissible via un réseau au moyen d'au moins une parmi des procédures de téléchargement vers montant, de téléchargement descendant et de poussée.
